## Europäisches Patentamt

## European Patent Office

## Office européen des brevets

(11) Publication number: **0 114 337**
**B1**

## EUROPEAN PATENT SPECIFICATION

(45) Date of publication of patent specification: **24.01.90**

(51) Int. Cl.⁵: **F 02 M 65/00,** F 02 D 41/02

(21) Application number: **83112790.7**

(22) Date of filing: **19.12.83**

(54) **Position sensing arrangement for use in a fuel injection pump or the like.**

(30) Priority: **27.12.82 JP 227139/82**

(43) Date of publication of application:
**01.08.84 Bulletin 84/31**

(45) Publication of the grant of the patent:
**24.01.90 Bulletin 90/04**

(84) Designated Contracting States:
**DE FR GB**

(56) References cited:
**DE-A-3 019 343**
**FR-A-2 473 626**
**US-A-3 630 643**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Kita, Toru**
**No. 1-23-18-314 Hairando**
**Yokosuka City (JP)**

(74) Representative: **Patentanwälte TER MEER -**
**MÜLLER - STEINMEISTER**
**Mauerkircherstrasse 45**
**D-8000 München 80 (DE)**

Courier Press, Leamington Spa, England.

## Description

Background of the Invention
Field of the Invention

The present invention relates generally to a position detecting arrangement and more specifically to a device according to the preamble of claim 1.

Description of the Prior Art

DE—A—30 19 343 discloses a fuel injection pump for an internal-combustion engine, comprising an axially movable plunger which defines a working element of said fuel injection pump and an axially movable sleeve valve coaxially arranged on said plunger. This fuel injection pump further includes a linear acting electric motor comprising a coil arrangement with a bobbin coaxial to the sleeve valve. Said coil arrangement is selectively connectable with a source of electric power. In addition, said fuel injection pump comprises a position sensor for sensing the position of the sleeve valve and said position sensor is operatively connected within an electrical circuit.

However, the ful injection pump according to DE—A—30 19 343 requires a great number of components decreasing the reliability and increasing the manufacturing costs. Furthermore, this pump lacks the required degree of accuracy and induces a pure injection quantity control due to insufficiently precise feed back control.

FR—A—2 473 626 discloses a control device for the regulation and surveillance of an internal combustion engine. This device is essentially a variable capacitor wherein a plurality of movable sector shaped plates are interleaved between and insulatingly spaced from essentially rectangular stationary plates. The plates are mounted on a shaft for synchronous movement.

Summary of the Invention

It is an object of the invention to provide a position sensor which accurately indicates the position of a valve member or the like and which requires only a reduced number of components, increasing the reliability and lowering the manufacturing costs.

In brief, the invention features a device comprising an axially movable cylindrical member which defines a working element of said device, an axially movable control element coaxially arranged on said cylindrical member, a linear acting electric motor, said motor comprising a coil arrangement with a bobbin coaxial to the control element, said coil arrangement being selectively connectable with a source of electrical power, and a position sensor for sensing the position of the control element, said position sensor being operatively connected within an electrical circuit, this device further comprises a cylindrical pole piece fixed to and arranged around said control element, at least one permanent magnet fixed on the outer peripheral surface of the cylindrical pole piece, an electrically conductive non-magnetic sleeve disposed on said pole piece coaxially within and in a proximate contact-free relationship with said bobbin, said bobbin consisting of an electrically conductive non-magnetic material and serving as a reference electrode of the position sensor, and at least one sensing electrode disposed coaxially with respect to said sleeve and in a proximate and contact-free relationship with at least one end of said bobbin.

A preferred embodiment of the invention shows two sensing electrodes disposed coaxially about said sleeve and in a proximate and contact-free relationship with each of the axial ends of said bobbin.

By sensing the change in electrostatic capacity between the electrodes the position of the valve may be detected. The sensor, due to its nature finds application in devices such as fuel injection pumps wherein it permits very compact solenoid (motor)/sensor arrangements.

Brief Description of the Drawings

The features and advantages of the arrangement of the present invention will become more clearly appreciated from the following description taken in conjunction with the accompanying drawings in which:

Fig. 1 is a sectional elevation of an embodiment of the present invention;

Figs. 2 and 3 show schematically the operation of the arrangement shown in Fig. 1; and

Fig. 4 shows an example of circuitry suitable for use in the embodiment of the present invention.

Description of the Preferred Embodiments

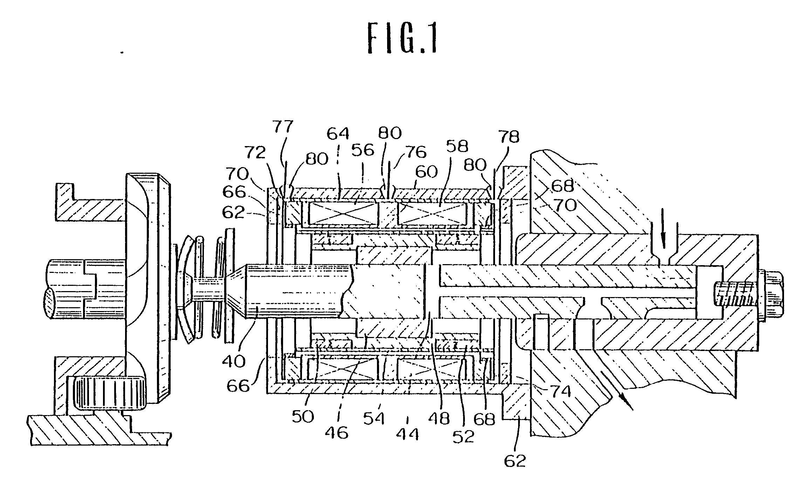

Fig. 1 shows an embodiment of the present invention. In this arrangement an axially movable cylindrical member or a fuel injection pump plunger 40 is reciprocatively disposed in a bore within a housing of the fuel injection pump. A sleeve valve is slidably disposed on the plunger 40 in a manner to control a drain passage 44. This valve comprises a non-magnetic cylindrical control element 46 on which an essentially cylindrical stepped pole piece 48 is fixed. Two permanent magnets 50, 52 are fixed as shown on the shoulders of the pole piece 48 so as to define an essentially flat cylindrical surface. The magnets 50, 52 are arranged such that the poles (N, S) thereof are radially aligned and reversed with respect to each other. Viz., magnet 50 is arranged (merely by way of example) so that the N pole thereof is located radially outboard of the corresponding S pole, while magnet 52 is arranged so that the S pole thereof is located radially outboard of the corresponding N pole.

Snugly disposed about the pole piece 48 and permanent magnets 50, 52 is an electrically conductive but non-magnetic sleeve 54 (made of aluminum for example).

Two electromagnetic coils 56, 58 are wound on an electrically conductive non-magnetic bobbin 60. This bobbin 60 serves a "first" electrode as will become clear hereinlater. The bobbin 60 is disposed within a hollow cylindrical yoke 62 formed of a "soft" magnetic material and insulated therefrom via the interposition of an insulating cylindrical sleeve 64. Two auxiliary or "second" sensing electrodes 66, 68 are disposed, in a spaced contact free relationship with respect to the so called "first" electrode, within the yoke 62. These sensing electrodes 66, 68 are, as shown, maintained in position via the interposition of annular insulating members 70, 72. An annular metallic spacer 74 disposed in the mouth of the yoke 62 serves to secure the bobbin 60 and "second" sensing electrodes 66, 68 therewithin.

Lead wires 76, 77, 78 are disposed through apertures formed in the yoke 62 and electrically connected to the bobbin 60 and sensing electrodes 66, 68, respectively. These lead wires 76, 77, 78 are insulated from the yoke 62 by insulating plugs 80.

With the above described arrangement, upon suitable energization of the solenoid coils 56, 58 (such as is well known in the art of fuel injection), the unit defined within the electrically conductive non-magnetic sleeve 54 is induced to move along the plunger 40 and therefore control the opening/closing timing of the drain passage 44 by the control element 46.

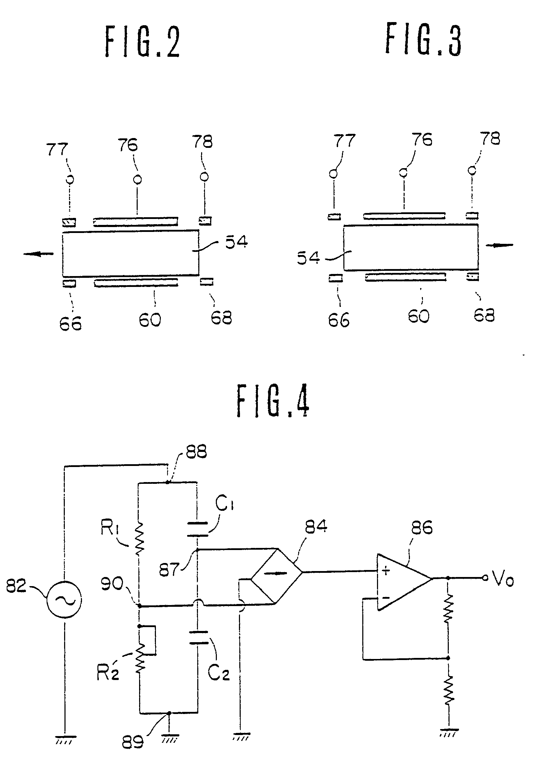

Figs. 2 and 3 schematically show the position sensor arrangement (per se) as disposed in the above disclosed device. As will be appreciated, irrespective of the position of the sleeve 54 within the yoke 62, the interfacial area defined between the inner periphery of the bobbin 60 (or "first" electrode as it will be referred to hereinafter) and the electrically conductive non-magnetic sleeve 54 remains constant, while that defined between the so called "second" sensing electrodes 66, 68 and the sleeve 54 vary with change in position of the sleeve 54. By sensing the variation in electrostatic capacitance produced between the electrodes 60 and 66 with respect to that produced between electrodes 60 and 68, the position of the sleeve 54 may be detected.

Fig. 4 schematically shows a circuit arrangement suitable for use with the above disclosed arrangement. This circuit takes the form of an AC source 82, a bridge circuit including series connected fixed resistor $R_1$ and variable resistor $R_2$ connected in parallel with series connected capacitors $C_1$ and $C_2$ (which in fact represent the aforementioned capacitances of electrodes 60—66 and 60—68 — viz., the electrodes 60, 66, 68 may be deemed as being connected at junctions or points 87, 88, 89 respectively), and a full wave rectifier 84 connected to earth and junctions or points 87, 90, as shown. The output of the rectifier 84 is fed to a DC amplifier 86 which produces an analog voltage Vo.

With this arrangement the variable resistor $R_2$ may be adjusted so that when the sleeve 54 is moved in one direction and assumes one extreme position thereof, the bridge circuit produces a zero voltage (Viz., produces a zero potential across junctions 87, 90).

Thus, given that:
e is the output of the bridge circuit,

Vs is the voltage applied by the AC source,
C1 is the capacitance of capacitor $C_1$,
C2 is the capacitance of capacitor $C_2$, and
K is a constant;
it can be shown that:

$$3 = K + \frac{C1 - C2}{C1 + C2} \cdot Vs \qquad (1)$$

However, as the term C1 + C2 is constant as will be appreciated from the construction of the disclosed embodiment, it may be shown that:

$$e = K_1(C1 - C2) \cdot Vs + K_2 \qquad (2)$$

wherein $K_1$ and $K_2$ are constants.

Accordingly, as the voltage e varies linearly with the change in interfacial area between the sleeve 54 and the "second" sensing electrodes 66, 68 the analog voltage Vo outputted by the amplifier 86 will vary with the position of the control element 46 with respect to the three electrodes 60, 66, 68.

In connection with the disclosed embodiment it is possible to advantageously form the insulating members 70, 72 and each of the electrodes 66, 68 as a single unit by coating electrically conductive metal films (eg. platinum) on ceramic bases (eg. alumina).

The above disclosed embodiment exhibits a very compact construction via the dual use of bobbin as both (a) a part of the motor used to drive the control element along the plunger and (b) one of the electrodes vital to the invention.

The present invention is deemed advantageous in that, in the event it is used in an environment wherein the media between the electrodes is apt to undergo a change in dielectric constant due to temperature fluctuation and/or content thereof (viz., such as the inclusion of water or alcohol in diesel or gasoline fuels as is apt to occur in the disclosed embodiment), no erroneous output will occur due to the compensative nature of the arrangement.

## Claims

1. A device comprising
an axially movable cylindrical member (40) which defines a working element of said device;
an axially movable control element (46) coaxially arranged on said cylindrical member (40);
a linear acting electric motor, said motor comprising a coil arrangement (56, 58) with a bobbin (60) coaxial to the control element (46), said coil arrangement (56, 58) being selectively connectable with a source of electrical power; and
a position sensor for sensing the position of the control element (46), said position sensor being operatively connected within an electric circuit characterized by
a cylindrical pole piece (48) fixed to and arranged around said control element (46),
at least one permanent magnet (50, 52) fixed on the outer peripheral surface of the cylindrical pole piece (48),

an electrically conductive non-magnetic sleeve (54) disposed on said pole piece (48) coaxially within and in a proximate contact free relationship with said bobbin (60), said bobbin (60) consisting of an electrically conductive non-magnetic material and serving as a reference electrode of the position sensor, and

at least one sensing electrode (66, 68) disposed coaxially with respect to said sleeve (54) and in a proximate and contact free relationship with at least one end of said bobbin (60).

2. A device as claimed in claim 1, characterized by two sensing electrodes (66, 68) disposed coaxially about said sleeve (54) and in a proximate and contact free relationship with each of the axial ends of said bobbin (60).

3. A device as claimed in claim 2 characterized in that said electrical circuit comprises:

a single source of AC current (82);

a bridge circuit including a fixed resistor (R1) and a variable resistor (R2) which are connected in parallel with first and second capacitors (C1, C2), said first and second capacitors (C1, C2) being defined by electrodes (60 and 66) and (60 and 68), respectively, and

a full wave rectifier (84) which is connected to a first point (90) defined between said first and second resistances (R1 and R2) and a second point (87).

**Patentansprüche**

1. Vorrichtung mit
einem axial beweglichen zylindrischen Bauteil (40) als Arbeitselement;

einem axial bewegbaren Steuerelement (46), das koaxial zum zylindrischen Bauteil (40) angeordnet ist;

einem linear wirkenden Elektromotor mit einer Spulenanordnung (56, 58), die einen zum Steuerelement (46) koaxialen Spulenträger (60) aufweist und selektiv mit einer Spannungsquelle verbindbar ist; und

einem in eine elektrische Schaltung operativ eingebundenen Positionssensor zur Ermittlung der Position des Steuerelements (46), gekennzeichnet durch

einen zylindrischen Polschuh (48), der um das Steuerelement (46) angeordnet und mit diesem verbunden ist,

mindestens einen Permanentmagneten (50, 52), der auf der nach außen weisenden Oberfläche des zylindrischen Polschuhs (48) befestigt ist,

eine elektrisch leitende nichtmagnetische Hülse (54), die auf dem Polschuh (48) innerhalb des Spulenträgers (60) koaxial zu diesem unmittelbar in seiner Nähe, aber diesen nicht berührend angeordnet ist, wobei der Spulenträger (60) aus einem elektrisch leitenden, nichtmagnetischen Material besteht und als eine Referenzelektrode des Positionsensors dient, und durch

mindestens eine Sensorelektrode (66, 68), die koaxial mit der Hülse (54) und in unmittelbarer Nähe von mindestens einem Ende des Spulenträgers (60), aber diesen nicht berührend angeordnet ist.

2. Vorrichtung nach Anspruch 1, gekennzeichnet durch zwei Sensorelektroden (66, 68), die koaxial mit der Hülse (44) und in unmittelbarer Nähe von beiden axialen Enden des Spulenträgers (60), aber diesen nicht berührend, angeordnet sind.

3. Vorrichtung nach Anspruch 2, dadurch gekennzeichnet, daß die elektrische Schaltung enthält:

eine einzelne Wechselstromquelle (82);

eine Brückenschaltung mit einem Festwiderstand (R1) und einem Regelwiderstand (R2), die parallel mit einem ersten und einem zweiten Kondensator (C1, C2) geschaltet sind, die durch Elektroden (60 und 66) bzw. (60 und 68) gebildet sind, und

einen Vollweggleichrichter (84), der mit einem ersten Anschlußpunkt (90) zwischen dem ersten und zweiten Widerstand (R1 und R2) und mit einem zweiten Anschlußpunkt (84) verbunden ist.

**Revendications**

1. Dispositif comprenant
un organe cylindrique axialement mobile (40) qui définit un élément de travail dudit dispositif;

un élément de contrôle axialement mobile (46) agencé coaxialement sur ledit organe cylindrique (40);

un moteur électrique linéaire, ledit moteur comprenant un agencement d'enroulement (56, 58) avec une bobine (60) coaxiale à l'élément de contrôle (46), ledit agencement d'enroulement (56, 58) pouvant être sélectivement connecté à une source de courant électrique; et

un capteur de position pour détecter la position de l'élément de contrôle (46), ledit capteur de position étant activement connecté à un circuit électrique
caractérisé par

une pièce polaire cylindrique (48) fixée à et agencée autour dudit élément de contrôle (46),

au moins un aimant permanent (50, 52) fixé sur la surface périphérique externe de la pièce polaire cylindrique (48),

un manchon non magnétique électriquement conducteur (54) disposé sur ladite pièce polaire (48) coaxialement dans et en relation proche sans contact avec ladite bobine (60), ladite bobine (60) consistant en un matériau électriquement conducteur et non magnétique et servant d'électrode de référence du capteur de position, et

au moins une électrode de détection (66, 68) disposée coaxialement par rapport audit manchon (54) et en relation proche et sans contact avec au moins une extrémité de ladite bobine (60).

2. Dispositif selon la revendication 1, caractérisé par deux électrodes de détection (66, 68) disposées coaxialement autour dudit manchon (54) et en relation proche et sans contact avec

EP 0 114 337 B1

chacune des extrémités axiales de ladite bobine (60).

3. Dispositif selon la revendication 2, caractérisé en ce que ledit circuit électrique comprend:

une seule source de courant alternatif (82);

un circuit pont comprenant une résistance fixe (R1) et une résistance variable (R2) qui sont connectées en parallèle à des premier et second condensateurs (C1, C2), lesdits premier et second condensateurs (C1, C2) étant définis par des électrodes (60 et 66) et (60 et 68), respectivement, et

un redresseur double alternance (84) qui est connecté à un premier point (90) défini entre lesdites première et seconde résistances (R1 et R2) et un second point (87).

# FIG.1

EP 0 114 337 B1

# FIG.2

# FIG.3

# FIG.4